# EUROPEAN PATENT APPLICATION

(11) **EP 2 051 474 A1**
(43) Date of publication of application: **22.04.2009**
(21) Application number: 07291258.7
(22) Date of filing: 15.10.2007
(51) Int. Cl.: H04L 29/06

(54) **Media acceleration in congestions assigned by IPD**

(71) Applicant: Alcatel Lucent, 75008 Paris (FR)
(72) Inventor: Robinson, David Cecil, Wiltshire SN8 2NP (GB); Kisel, Andrey, Berkshire SL6 8DH (GB); Chawia, Gulshan, Berkshire SL6 4RD (GB)
(74) Representative: Kohler Schmid Möbus

(57) **Abstract**

A method for transmitting real time digital media assets, in particular video or multimedia data, by means of data packets (2, 8, P, DP1, DP2, KP1, KP2, 13) via an internet protocol (=IP) network to a client (10),
wherein the media assets are encoded by progressive coding, with the media assets being split into frames, with a small number of frames being fully encoded, called key-frames, and with the rest of the frames being differentially encoded, called delta-frames, with the delta-frames carrying only information about a difference with respect to the previous frame,
and wherein in case of congestions on the IP network, data packets (DP1, DP2, 13) intended for transmission are dropped,
is characterized in that data packets (2) intended for transmission are checked for the type of frame carried,
and that the type of frame carried is taken into account when choosing data packets (DP1, DP2, 13) intended for transmission to be dropped.
The inventive method increases the quality of reproduced (displayed) data of real time media assets transferred via a congested internet protocol network.

## Description

### Background of the invention

The invention relates to a method for transmitting real time digital media assets, in particular video or multimedia data, by means of data packets via an internet protocol (IP) network to a client,
wherein the media assets are encoded by progressive coding, with the media assets being split into frames, with a small number of frames being fully encoded, called key-frames, and with the rest of the frames being differentially encoded, called delta-frames, with the delta-frames carrying only information about a difference with respect to the previous frame, and wherein in case of congestions on the IP network, data packets intended for transmission are dropped.

Such a method is known from the "Cisco IOS Quality of Service Solutions Configuration Guide Release 12.2", Chapter "Congestion Management Overview", see also http://www.cisco.com/univercd/cc/td/doc/product/software/ios122/122cgcr/fgos c/fgcprt2/gcfconmg.htm, posted 2006.

In recent years, it has become popular to transmit video data, and more generally multimedia data, digitally via the internet. This allows a simple worldwide distribution of this data, without the need for particular equipment such as terrestrial RF broadcasting stations.

Since complete video and multimedia files (such as a movie) tend to be rather big, it is common not to download a complete file before beginning to reproduce (in particular display) the data, but to download data and reproduce data simultaneously, with the data downloaded being displayed basically immediately at the client. Such data for immediate reproduction is referred to as "real time" here. Note that a TV program transmitted live via the internet always requires the transmission of real time media assets.

The real time media assets are typically provided in data packets, which sequentially arrive at the client. The data packets are transmitted from the data provider (such as the server of a TV station) to the client (such as a personal computer, with the user sitting in front of it) via an internet protocol network. However, the data connections of the internet protocol network have a limited data transfer capacity. In case of data congestions on the network, the client may not receive the next data packet on time or not at all (note that a delayed packet is basically useless, so dropping packets in case of network congestions is common for real time data transmission). In this case the user, watching the reproduced data at the client, will notice a disturbance, e.g. a frozen picture, macroblocking or other artefacts. In this respect, congestions deteriorate the quality of the reproduced data.

In the state of the art, there are several approaches of congestion handling and congestion avoidance.

So called connectionless protocols such as UDP do not recover from congestions because they ignore (or are not aware of) packet loss. Congestion aware TCP/IP networks typically use some mechanisms for congestion avoidance, compare TCP Congestion Control - RFC2581; Increasing TCP's Initial Window - RFC3390; The Addition of Explicit Congestion Notification (ECN) to IP - RFC3168, and automatic congestion recovery. For example, a TCP/IP network can detect dropped packets, which it correctly interprets as congestion on the network. The sender reduces its sending rate for a certain amount of time, and then tries to find out if the network is no longer congested by increasing the rate again, e.g. as in slow-start algorithm. However, while congestion avoidance is used in a video delivery network, automatic congestion recovery is very often omitted by customising the TCP/IP protocol stack, The property of the real-time media asset is such that there is no time for resending media packets because the rest of the information should be presented to the user in the real-time.

It is also known to reduce the amount of data to be transmitted, and thus make congestions less likely, by encoding the media assets by progressive coding.

In progressive coding, sometimes also referred to as predictive coding or coding with memory, the media asset is split into frames. Only a small number of frames, here called *key frames* or *K-frames,* is fully encoded (i.e. carrying a complete picture), and a remaining, large number of frames, here called *delta frames,* is differentially encoded (i.e. carrying only the information about a change of the picture with respect to a preceding key frame of delta frame). A key frame together with a set of derived differentially encoded delta frames is called *sequence* or *group of pictures,* since it allows the reconstruction of a sequence of complete pictures equal to the number of frames in the group. Note that the amount of data of a delta frame is much smaller than the amount of data necessary for fully encoding a complete picture, thus the data transfer rate necessary for transmitting the encoded media assets is reduced.

### Object of the invention

It is the object of the invention to increase the quality of reproduced (displayed) data of real time media assets transferred via a congested internet protocol network.

### Short description of the invention

This object is achieved, in accordance with the invention, by a method as introduced in the beginning, characterized in that data packets intended for transmission are checked for the type of frame carried, and that the type of frame carried is taken into account when choosing data packets intended for transmission to be dropped.

In the state of the art, in case of a congestion on the internet protocol network used for transferring data packets of real time multimedia assets encoded by progressive coding, data packets to be transmitted (forwarded) are dropped randomly, only taking into account the current traffic density (or the currently available data transfer capacity) on the IP network. However, this leads to sending data packets via the IP network that are basically useless to the client: once a data packet with a particular frame (or part of said frame) of a group of pictures has been dropped, all subsequent frames of the same group of pictures cannot be used to reconstruct the corresponding complete pictures. The reconstruction of pictures can only be resumed when the data packet (or data packets) carrying the next key frame arrives at the client.

Spoken more technically, a key frame is necessary as entry point for synchronization of forthcoming frames, or in other words, for accessing the reconstruction of complete pictures again. A key frame is therefore also referred to a s random access point (RAP).

The basic idea of the invention is to take into account the random access points when discarding data, i.e. when dropping data packets, in a congested delivery environment. In this way, the transfer of unusable data via the IP network can be minimized or even avoided completely, thus attenuating the current congestion on the network. Further, the recovery of the client, such as an IPTV (internet protocol television) client, can be accelerated, i.e. normal reproduction (display) of the media assets can be resumed faster.

When taking into account the RAPs (i.e. the key frames) when choosing data packets to be dropped in case of a congestion, the most simple measure is to give data packets carrying key frames (including data packets carrying parts of key frames) a higher priority for accessing (or for being forwarded within) the IP network than data packets carrying only delta frames. For example, sending a data packet carrying a key frame into the IP network might be tried for a longer time before it is dropped than in case of a data packet carrying only a delta frame.

In case of heavy and enduring congestions, all data packets carrying only delta frames may be dropped generally. This increases the probability that at least some key frames are received by the client, so the client can reconstruct a minimum of complete pictures. Data packets carrying key frames are always useable by the client; and transferring a key frame is never in vain.

By means of the invention, the congestion handling is tailored to the properties of the transmitted digital media (data). The invention does not require any alterations to the client. The invention may be implemented in a network access device or a device forwarding data packets within an IP network. The invention can be combined with (i.e. used in parallel with) traditional congestion handling measures.

### Preferred variants of the invention

In a highly preferred variant of the inventive method, when a data packet intended for transmission has been dropped due to a congestion on the IP network, all forthcoming data packets intended for transmission are also dropped until the next data packet intended for transmission with the next key-frame comes up. This avoids transmitting data packets which are unusable for the client, and thus reduces the data traffic on the IP network, mitigating the congestion. Moreover, resuming the data transfer with a key frame will allow the client an immediately recovery. This variant results in particularly improved user experience at the client device. In case key frames are spread over several data packets, all forthcoming data packets intended for transmission are dropped until the first data packet carrying a part of the next key frame comes up, according to this variant.

A preferred further development of this variant provides that data packets intended for transmission are stored in virtual circular queue buffer, and for transmitting data packets via the IP network, stored data packets are read out from the virtual circular queue buffer, that pointers are stored for indicating stored data packets carrying key frames, and that in case a stored data packet is dropped due to a congestion on the IP network, the read out from the virtual circular buffer queue is continued with the next stored data packet carrying the next key-frame, as indicated by the pointers. The virtual circular queue buffer with the pointer simplifies and accelerates the dropping of useless data packets and jumping to the next key frame-carrying data packet. The virtual circular buffer queue provides storage for incoming data packets, wherein a newly arrived data packet takes the place of the oldest stored data packet, The pointers may be realized, in accordance with the invention, by actively marking only data packets carrying a key frame (or a part of a key frame), and data packets not actively marked can be identified as carrying only delta frames then. Note that the type of discarded data is not important as long as it is not the key-frame data. Alternatively, all data packets may be marked with a pointer, indicating the type of frame carried. Again, in case key frames are spread over several data packets, the read out is continued with the first stored data packet carrying a part of the next key frame, according to this variant.

In a preferred option for this further development, the pointers are stored within the virtual circular buffer queue or within a sniffer function. A storage integrated with the sniffer function avoids information transfer. A storage integrated in the virtual circular buffer queue avoids the implementation of a separate pointer storage.

In an advantageous option, for each data packet carrying a key frame, a pointer is stored. This makes the identification of key-frame packets particularly simple. Note that in case of key frames spread over several data packets, a pointer is stored for each data packet carrying a part of a key frame, in this variant.

In an advantageous, alternative option, each key frame is spread over a multitude of data packets, and a pointer is stored only for the first and the last data packet of each key frame. This keeps the number of necessary pointers low, thus saving storage space.

Also within the scope of the present invention is an edge device, in particular a multicast replicator, router or DSLAM, for sending real time media assets encoded by progressive coding via an internet protocol (IP) network to a client,
wherein the edge device
- comprises an input line card for receiving incoming data packets,
- has installed a sniffer function for distinguishing data packets containing key-frames from data packets containing only delta-frames,
- has installed a virtual buffer, in particular a virtual circular queue buffer, for storing incoming data packets;
- comprises a pointer storage for storing pointers indicating stored data packets containing key-frames as determined by the sniffer function;
- comprises an output line card for reading out stored data packets from the virtual buffer and sending them as outgoing data packets onto the IP network,
- has installed a routing logic for choosing the stored data packets to be read out and the outgoing data packets, taking into account congestions on the IP network and taking into account the pointers of the data packets stored. With the inventive edge device, the inventive method as introduced above can be realized with few efforts.

In a preferred embodiment, the pointer storage is integrated within the sniffer function, or integrated within the virtual buffer. Since the sniffer function effects setting the pointers, the first alternative avoids information transfer. The second alternative allows to use an already installed storage for the data packets also for storing the pointers. The pointer may be a single bit set to 0 or 1 (with 0 indicating non-key-frame, and 1 indicating key-frame), with the bit for example annexed to the header of each data packet stored in the virtual buffer.

In a preferred embodiment of the inventive edge device, the routing logic is programmed such that after a stored data packet has been discarded due to congestion on the IP network, the output line card is instructed to continue with reading out from the position of the virtual buffer containing the data packet with the next key-frame as determined by the pointer. In this embodiment, the transmission of useless data packets is minimized. Note that one can optionally enforce dropping all non key-frame data packets (i.e. the data packets to be skipped) first.

Further preferred is an embodiment wherein the edge device is adapted to multicast data packets by having installed a virtual buffer and a routing logic for each destination, and comprising an output line card for each destination. By this means, the user experience of each destination's client can be handled in an optimal way.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing and detailed description of the invention

The invention is shown in the drawing.

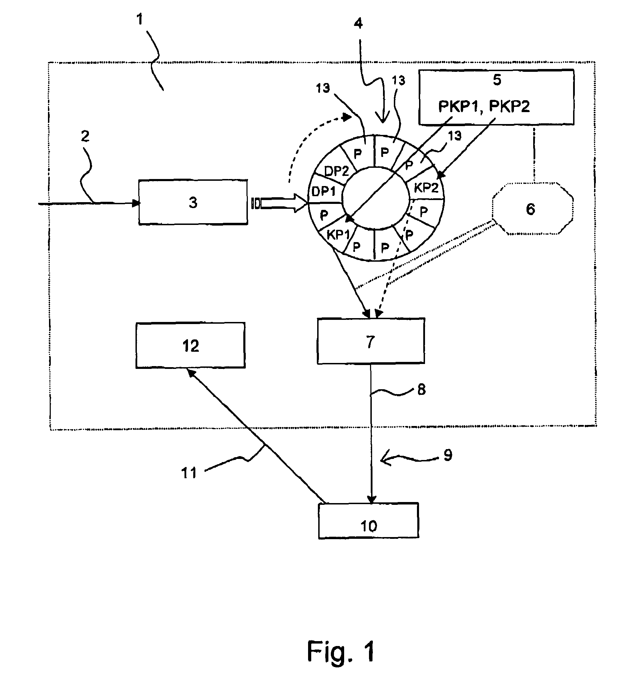

- Fig. 1: illustrates the transmission of data packets in an IP network, in accordance with the invention.

The present invention proposes a generic method for improving video or multimedia quality in a congested internet protocol (IP) delivery network. In this way, the invention relates to media acceleration in congestions assigned by IPD. More specifically, the invention concerns a method for handling network congestions when introducing or forwarding packed digital media assets, such as video or multimedia data, in an IP network, wherein the data is encoded by progressive coding.

The progressive coding splits media assets to be transmitted via the IP network into fully encoded key frames and differentially encoded delta frames. Data packets to be transmitted correspond to one of two categories: They may contain only delta frames (=delta frame packet), with typically exactly one delta frame per delta frame packet, or may contain key frames (=key frame packet), also with typically exactly one key frame per key frame packet (Note that in case of large key frames, each key frame may also be distributed over a multitude of data packets).

In case of a congestion the IP network (i.e. the data traffic is such heavy that not all data packets can be sent onto the IP network), in the state of the art, data packets to be transferred via the IP network are dropped whenever the IP network is too congested for adding an upcoming data packet. In other words, the random access points (RAPs) for reconstruction (decoding) the media assets are not taken into account when discarding data in a congested transmission environment. As a result, when a key frame or an incremental delta frame is discarded or corrupted, all subsequent data sent afterwards and until the next RAP (or key frame packet) will be useless to the client, and the client will have to discard this data.

In contrast to that, the invention proposes to take into account the type of frames a data packet contains when deciding to drop or not to drop a specific data packet. Additionally, it is advantageous to take into account whether a preceding frame of the same sequence / group of pictures has already been dropped (or otherwise been lost or corrupted).

Preferably, the all data packets between a dropped (lost, corrupted) data packet and the next key frame packet is discarded, leading to a practically instantaneous recovery: media can be processed and immediately presented to the end user. This creates a better user experience. In the state of the art, in contrast, client devices often make a 'best effort' to recover from lost data either by processing and presenting all the data regardless discarded (lost) parts, or by freezing the picture until the next RAP. Both approaches result in the user noticing visible and lasting artefacts.

The invention can be implemented in an edge network device, as presented by way of example with respect to Fig. 1.

Figure 1 illustrates the inventive video acceleration in a congested distribution network. At an edge device 1, data packets 2 arrive, which are intended for transmission via an IP network, here represented by a broadcast channel 9. The IP network (resp. the broadcast channel 9) links the edge device 1 with a client device 10, such as an IPTV client device.

The incoming data packets 2 are fed via an input line card 3 into a virtual circular queue buffer 4. Whenever a new data packet 2 arrives at the virtual circular queue buffer 4, it takes the place of the oldest stored data packet. This leads to a chronological "circular" storing as indicated by the arrow in Fig. 1. Note that in other implementations, non-circular virtual storages may be used, for example deleting several stored packages at a time in a block-wise manner or using FIFO (first in first out) stack.

In case of multicast packets, the packets to each destination may be placed in (and processed via) a separate virtual circular queue buffer. (Note that alternatively, packets to several different destinations can be processed through the same virtual circular buffer. In this case, output line cards would be reading from different places from the same circular virtual buffer.)

At the edge device 1, a sniffer function 5 is installed. The sniffer function 5 checks incoming packets 2 in the buffer 4 to determine the packets (here KP1, KP2) containing a key frame and stores pointers to these packets, shown as PKP1, PKP2 (Pointer to the Key-frame Packet). Only pointers to the few last key frames need to be stored.

Let us assume that after sending packet containing key frame 1 (KP1, Key-frame Packet 1), several packets have to be dropped due to congestion. These packets are shown as DP1 (Dropped Packet 1) and DP2.

The proposed invention in this situation discards all subsequent packets (P, marked with Ref. No. 13) until next key-frame packet, shown as KP2, comes up (In the state of the art, the transmission would be resumed with the packet immediately following the last discarded packet DP2).

Consequently, in one implementation, an output line card 7 can be instructed by a routing logic 6 to read from the PKF₂ position rather than from the position immediately following the last discarded packet DP2.

The client 10 can start presenting media immediately after discarded packets, because the first (next) forwarded packet contains the key frame.

The technology allows cost effective combined implementation in the network access device together with other technologies aimed at improving user experience, e.g. fast channel change.

The invention has, in particular, the following advantages over existing solutions:
- Allows faster recovery from media loss in the congested distribution network;
- Improves user experience by reducing recovery time;
- Improves resilience and user experience by eliminating corrupted media data from being send to the client device (eliminating the risk of presenting this corrupted data to the user).

### Table of reference signs

- 1: edge device
- 2: incoming data packets
- 3: input line card
- 4: virtual circular queue buffer
- 5: sniffer function
- 6: routing logic
- 7: output line card
- 8: outgoing data packets
- 9: broadcast channel
- 10: client device
- 11: multicast management (e.g. IGMP)
- 12: group management
- 13: data packets carrying delta frames only, dropped according to the invention
- P: data packet carrying delta frames only
- KP1, KP2: data packets carrying key frames
- DP1, DP2: data packets (here carrying delta frames only), dropped due to network congestion
- PKP1, PKP2: pointers to a key frame packet

## Claims

1. Method for transmitting real time digital media assets, in particular video or multimedia data, by means of data packets (2, 8, P, DP1, DP2, KP1, KP2, 13) via an internet protocol (=IP) network to a client (10), wherein the media assets are encoded by progressive coding, with the media assets being split into frames, with a small number of frames being fully encoded, called key-frames, and with the rest of the frames being differentially encoded, called delta-frames, with the delta-frames carrying only information about a difference with respect to the previous frame,
and wherein in case of congestions on the IP network, data packets (DP1, DP2, 13) intended for transmission are dropped,
**characterized in that** data packets (2) intended for transmission are checked for the type of frame carried, and that the type of frame carried is taken into account when choosing data packets (DP1, DP2, 13) intended for transmission to be dropped.

2. Method according to claim 1, **characterized in that** when a data packet (DP1, DP2) intended for transmission has been dropped due to a congestion on the IP network, all forthcoming data packets (13) intended for transmission are also dropped until the next data packet (KP2) intended for transmission with the next key-frame comes up.

3. Method according to claim 2, **characterized in that** data packets (2, P, DP1, DP2, KP1, KP2) intended for transmission are stored in virtual circular queue buffer (4), and for transmitting data packets (8) via the IP network, stored data packets (P, KP1, KP2) are read out from the virtual circular queue buffer (4), that pointers (PKP1, PKP2) are stored for indicating stored data packets (KP1, KP2) carrying key frames, and that in case a stored data packet (DP1, DP2) is dropped due to a congestion on the IP network, the read out from the virtual circular buffer queue (4) is continued with the next stored data packet (KP2) carrying the next key-frame, as indicated by the pointers (PKP1, PKP2).

4. Method according to claim 3, **characterized in that** the pointers (PKP1, PKP2) are stored within the virtual circular buffer queue (4) or within a sniffer function (5).

5. Method according to claim 3, **characterized in that** for each data packet (KP1, KP2) carrying a key frame, a pointer (PKP1, PKP2) is stored.

6. Method according to claim 3, **characterized in that** each key frame is spread over a multitude of data packets, and a pointer is stored only for the first and the last data packet of each key frame.

7. Edge device (1), in particular a multicast replicator, router or DSLAM, for sending real time media assets encoded by progressive coding via an internet protocol (IP) network to a client (10), wherein the edge device (1)
- comprises an input line card (3) for receiving incoming data packets (2),
- has installed a sniffer function (5) for distinguishing data packets (KP1, KP2) containing key-frames from data packets containing only delta-frames (P, DP1, DP2),
- has installed a virtual buffer, in particular a virtual circular queue buffer (4), for storing incoming data packets (2, P, DP1, DP2, KP1, KP2);
- comprises a pointer storage for storing pointers (PKP1, PKP2) indicating stored data packets (KP1, KP2) containing key-frames as determined by the sniffer function (5);
- comprises an output line card (7) for reading out stored data packets
(P, KP1, KP2) from the virtual buffer (4) and sending them as outgoing data packets (8) onto the IP network,
- has installed a routing logic (6) for choosing the stored data packets (P, KP1, KP2) to be read out and the outgoing data packets (8), taking into account congestions on the IP network and taking into account the pointers (PKP1, PKP2) of the data packets (P, DP1, DP2, KP1, KP2) stored.

8. Edge device (1) according to claim 7, **characterized in that** the pointer storage is integrated within the sniffer function (5), or integrated within the virtual buffer (4).

9. Edge device (1) according to claim 7, **characterized in that** the routing logic (6) is programmed such that after a stored data packet (DP1, DP2) has been discarded due to congestion on the IP network, the output line card (7) is instructed to continue with reading out from the position of the virtual buffer (4) containing the data packet (KP2) with the next key-frame as determined by the pointers (PKP1, PKP2).

10. Edge device (1) according to claim 7, **characterized in that** it is adapted to multicast data packets (2, 8, P, DP1, DP2, KP1, KP2, 13) by having installed a virtual buffer (4) and a routing logic (6) for each destination, and comprising an output line card (7) for each destination.
